# EUROPÄISCHE PATENTSCHRIFT

(11) **EP 1 214 232 B1**
(45) Veröffentlichungstag und Bekanntmachung des Hinweises auf die Patenterteilung: **26.04.2006**
(21) Anmeldenummer: 00963887.5
(22) Anmeldetag: 08.08.2000
(51) Int. Cl.: B60S 1/40

(54) **VERBINDUNGSSTÜCK, ZUM VERBINDEN EINES WISCHBLATTS MIT EINEM WISCHERARM**
CONNECTING PIECE FOR CONNECTING A WIPER BLADE TO A WIPER ARM
PIECE DE LIAISON POUR ASSEMBLER UNE RACLETTE D'ESSUIE-GLACE AVEC UN BRAS D'ESSUIE-GLACE

(30) Priorität: 31.08.1999 DE 19941459
(43) Veröffentlichungstag der Anmeldung: 19.06.2002
(73) Patentinhaber: ROBERT BOSCH GMBH, 70442 Stuttgart (DE)
(72) Erfinder: ROEKENS, Jurgen, B-1820 Steenokkerseel (BE)
(86) Internationale Anmeldenummer: PCT/DE2000/002637
(87) Internationale Veröffentlichungsnummer: WO 2001/015946

(56) Entgegenhaltungen:
- EP-A- 0 585 811
- EP-A- 0 694 459
- DE-A- 19 618 307
- FR-A- 2 190 078
- FR-A- 2 744 082
- FR-A- 2 759 047
- US-A- 5 611 103

## Beschreibung

### Stand der Technik

Die Erfindung geht aus von einem Verbindungsstück zum Verbinden eines Wischblattes und eines Wischerarms nach den Oberbegriffen der Hauptansprüche, 1 und 2.

Es sind bereits Verbindungsstücke zum Verbinden des Wischerarms mit dem Wischblatt, beispielsweise aus der EP 0 863 058 A2, bekannt geworden, jedoch ist das dort vorgestellte Verbindungsstück mehrteilig ausgestaltet, so daß für unterschiedliche Wischerarme jeweils unterschiedliche Adapterteile teils nach dem Baukastensystem verwendet werden.

Aus der FR-A-2 190 078 sind mehrere Verbindungsstücke zum Verbinden eines Wischblatts mit einem Wischerarm bekannt. Insbesondere ist ein Verbindungsstück gezeigt, welches ein leistenförmiges Wischarmende mit einem Zapfen aufzunehmen vermag und in einen Bolzen als Verbindungselement am Wischblatt eingehakt wird.

### Vorteile der Erfindung

Das erfindungsgemäße Verbindungsstück mit den kennzeichnenden Merkmalen der Hauptansprüche hat dem gegenüber den Vorteil, daß es eine Vielzahl der gebräuchlichen Typen von Wischarmenden aufnehmen kann und daher auch bei einer Vielzahl unterschiedlich dimensionierter Wischerarme verwendbar ist. Darüber hinaus kann es einstückig, beispielsweise in einem Spritzgußverfahren hergestellt werden kann, wodurch sich ein wesentlicher Vorteil bei der Montage ergibt, da nicht erst bestimmt werden muß, welches Adapterstück für das jeweilige Wischerarmende passend ist. Dies ist insbesondere deshalb von besonderer Wichtigkeit, da die Montage im Regelfall vom Fahrzeugführer selbst, also von einem Laien und nicht von einem Fachmann durchgeführt wird.

Durch die in den Unteransprüchen aufgeführten Maßnahmen ergeben sich vorteilhafte Weiterbildungen und Verbesserungen des im Hauptanspruch angegebenen Verbindungsstücks.

Dadurch, daß das Wischarmende gabelförmig ausgebildet ist, ergibt sich eine hohe Steifigkeit der Verbindung zwischen Wischerarm und Wischblatt. Auf diese Weise kann der optimale Winkel zwischen Scheibe und Wischblatt genau eingehalten werden.

Ein passendes Adapterstück mit einer gabelförmigen Ausbildung kann das Verbindungsstück auch mit einem leistenförmigen Wischerarmende, wie bei einigen Wischerarmen üblich, verbinden, ohne an Steifigkeit einzubüßen.

Ist ein Bereich des Verbindungsstücks als nachgiebiges Plateau ausgebildet, wird eine besonders hohe Maßtoleranz erreicht. Wird die Nachgiebigkeit des Plateaus durch Stege, welche einen Winkel zum Wischerarm von weniger als 90° aufweisen verursacht, ergibt sich beim Entfernen des Verbindungsstückes vom Wischerarm ein selbstarretierender Effekt, welcher die Verbindungsstärke zwischen Wischerarm und Wischblatt weiter erhöht.

Dadurch, daß die nachgiebigen Bereiche Anschläge zur Begrenzung der Nachgiebigkeit aufweisen, wird zusätzlich noch eine hohe Bruchfestigkeit gewährleistet.

Durch die klammerartige Überstände zur Arretierung der Wischerarme lassen sich eine Vielzahl verschiedener Wischerarme sicher am Wischblatt befestigen, da nicht auf die vom Hersteller des Wischerarms verwendete Methode zur Arretierung zurückgegriffen werden muß.

### Zeichnungen

Nachstehend ist die Erfindung an Hand eines Ausführungsbeispiels mit zugehörigen Zeichnungen erläutert.

Es zeigen:
Figur 1 ein Teil einer Wischeranlage mit dem erfindungsgemäßen Verbindungsstück in Einbaulage in einer schematischen Darstellung,
Figur 2 einen Kastenbereich eines Mittelbügels eines Wischblatts,
Figur 3 ein hakenförmiges Wischerarmende,
Figur 4 ein erfindungsgemäßes Verbindungsstück und ein Pin-Arm Wischerarmende in perspektivischer Darstellung
Figur 5 und 6 ein erfindungsgemäßes Verbindungsstück mit jeweils einem hakenförmigen Wischerarmende
Figur 7 ein erfindungsgemäßes Verbindungsstück mit einem leistenförmigen Wischerarmende und einem gabelförmigen Adapter in perspektivischer Darstellung,
Figur 8 einen Schnitt durch ein erfindungsgemäßes Verbindungsstück und
Figur 9 einen Schnitt durch einen Adapter.

### Beschreibung des Ausführungsbeispiels

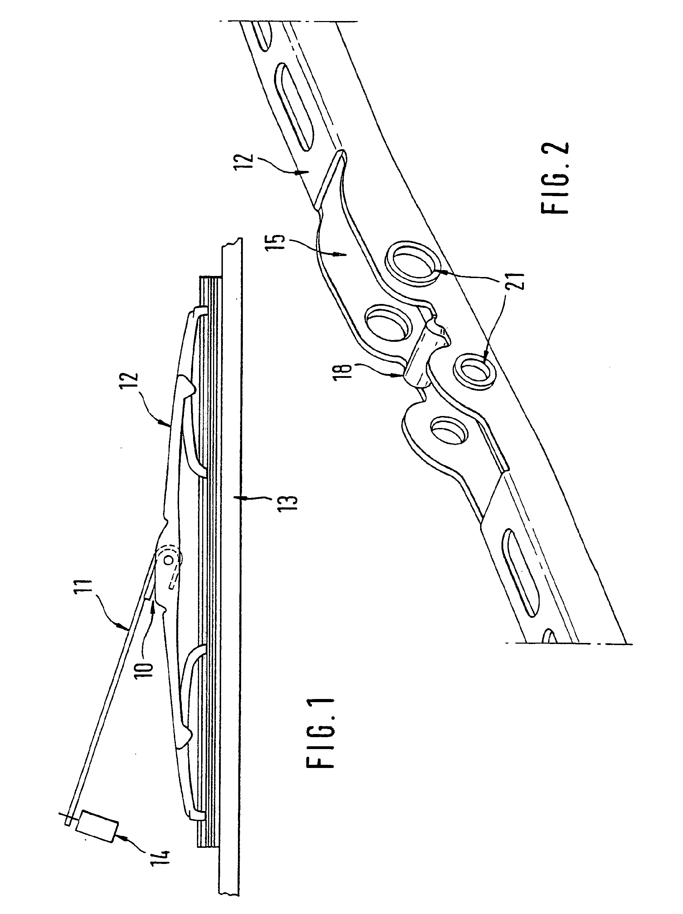

In Figur 1 ist ein Verbindungsstück 10 mit einem Wischerarm 11 und einem Wischblatt 12 zu sehen. In Montageposition liegt das Wischblatt auf einer Scheibe 13 auf. Der Wischerarm 11 hat zwei Enden, wobei sein unteres Ende mit einem Wischermotor 14 verbunden ist. Sein oberes Ende weist üblicherweise entweder ein hakenartiges Wischerarmende (11a), ein stiftartiges Wischerarmende (11b) oder ein leistenförmiges Wischerarmende (11c) auf.

In Figur 2 ist ein Kastenbereich 15 eines Mittelbügels eines Wischblattes 12 gezeigt. In diesem befindet sich ein Verbindungselement 18, häufig ein Niet oder ein Rollniet, welches den Körper des Verbindungsstücks 10 mit dem Wischblatt 12 verbindet. An den Seiten weist der Kastenbereich 15 verschiedene Bohrungen 21 auf, die auch eingefaßt sein können.

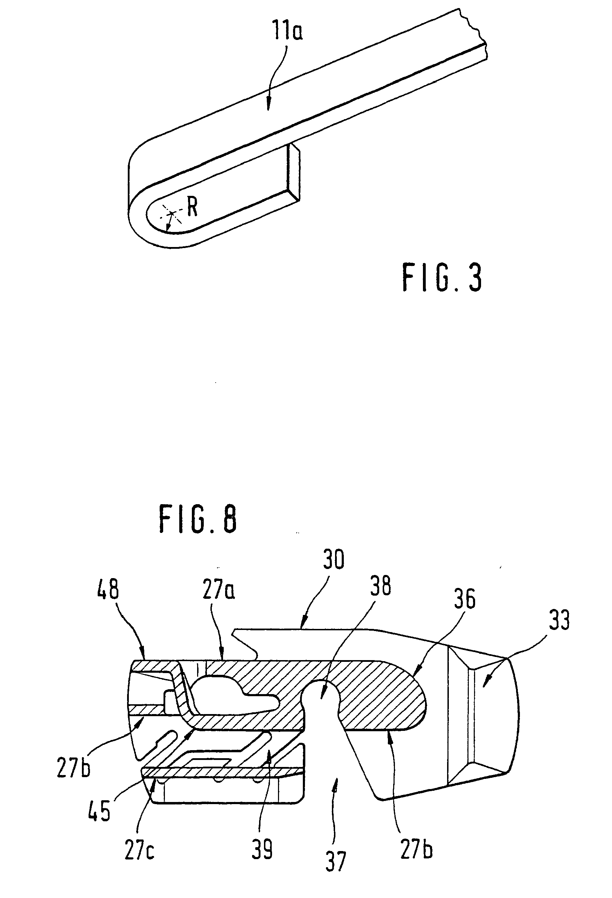

In Figur 3 ist ein hakenförmiges Wischerarmende. Es weist eine hakenförmige 180°-Biegung mit Radius R auf

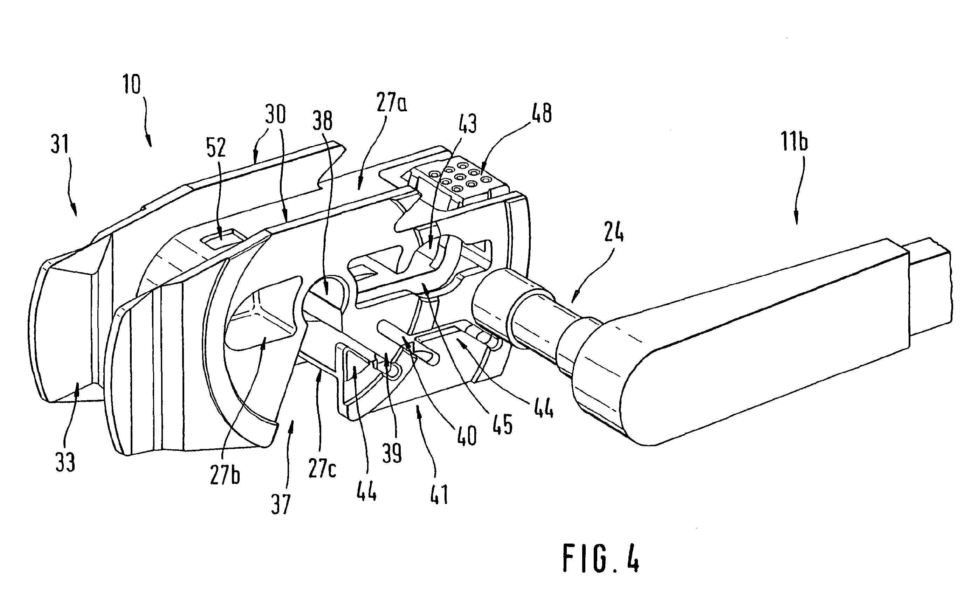

In Figur 4 ist ein erfindungsgemäßes Verbindungsstück 10 sowie ein stiftartiges Wischerarmende 11b dargestellt. Das stiftartige Wischerarmende 11b weist einen in Einbaulage parallel zur Scheibe und senkrecht zum Wischerarm 11 liegenden Stift 24 auf, dessen Durchmesser in einem geeigneten Abschnitt verjüngt ist.

Der Körper des Verbindungsstücks 10 weist im wesentlichen zwei Seitenwände 30 auf, die von drei Querverbindungen 27a, 27b und 27c gehalten werden und zum Aufnehmen und Abstützen des Wischblatts 12 dienen (siehe auch Figur 8).

Auf der dem Wischerarm 11 abgewandten Vorderseite des Verbindungsstückes sind die Seitenwände 30 über die Querverbindungen 27a,b,c hinaus weitergeführt und werden durch die Erhebungen 33 abgeschlossen. Dadurch entsteht ein klammerartiger Überstand 31 der zur Arretierung von hakenartigen Wischerarmenden 11a dient.

Die obere Fläche 27a ist im vorderen Bereich des Körpers nach unten zu einem Radius 36 gekrümmt.

An seiner im Montagezustand der Scheibe zugewandten Unterseite weist das Verbindungsstück eine Quernut 37 auf, welche sich nach oben hin verjüngt und von einer zylindrischen Aussparung 38, die zur Aufnahme des Verbindungselements 18 des Wischblatts 12 dient, abgeschlossen.

Im hinteren, dem dem Wischerarm zugewandten Bereich weist das Verbindungsstück 10 auf der der Scheibe 13 zugewandten Seite Schlitze 40 in den Seitenwänden 30 auf, so daß die untere Fläche 27c nur durch dünne Stege 39 getragen wird und so ein nachgiebiges Plateau bildet.

Die Richtung der Schlitze 40 und damit die Richtung Stege 39 ist zweckmäßigerweise so gewählt, daß beim Entfernen des Verbindungsstückes 10 aus dem Wischerarm 11a die Haftung des Wischerarmes 11a an der unteren Fläche 27c eine Vergrößerung des Anpreßdruckes der unteren Fläche 27c an den Wischerarm 11a bewirkt.

Dies wird dadurch erreicht, daß sich bei herausziehen des Verbindungsstücks 10 aus dem Wischerarm 11a die unterste Fläche 27c durch die Haftung derselben am Wischerarm 11a ein wenig nach vorne bewegt. Der Winkel der Stege 39 zum Wischerarm und damit der Abstand zwischen der oberen Fläche 27a und der unteren Fläche 27c wird dadurch etwas vergrößert wodurch sich der Anpressdruck der Fläche 27c gegen das abgebogene Ende des Wischerarms 11a erhöht.

Der nachgebende Bereich 41 weist zur Begrenzung der Nachgiebigkeit Anschläge 44 auf, welche ein Abbrechen der Stege 39 verhindern.

Oberhalb des Plateaus 27c weist das Verbindungsstück 10 zwischen der oberen und der mittleren Fläche ein quer durchragendes Loch 43 auf. Dieses Loch 43 dient als Aufnahme für einen Pin-Arm Wischerarm 11b.

Dazu ist die mittlere Fläche 27b durch eine zungenartige Lasche 45 unterbrochen, welche sich von der Quernut 37 bis hinter das Loch 43 erstreckt und den Durchmesser des Loches 43 innerhalb des Körpers des Verbindungsstücks 10 reduziert. Die Lasche 45 ist hinter dem Loch 43 nach oben gebogen und weist anschließend eine zur oberen Fläche 27a parallel in Flucht verlaufende Druckfläche 48 auf.

Wird nun der Stift 24 eines stiftartigen Wischerarmendes 11b in die Aufnahme 43 eingeführt, so wird die Lasche 45 zunächst nach unten gebogen, um dann, wenn der Stift 24 sich in der Sollposition befindet durch den verjüngten Durchmesser nach oben zu schnappen und dadurch den Wischerarm 11 einzurasten.

Auf der oberen Fläche weist das Verbindungsstück zwei Ausnehmungen 52 auf, welche zur Befestigung eines Adapters 55 dienen können.

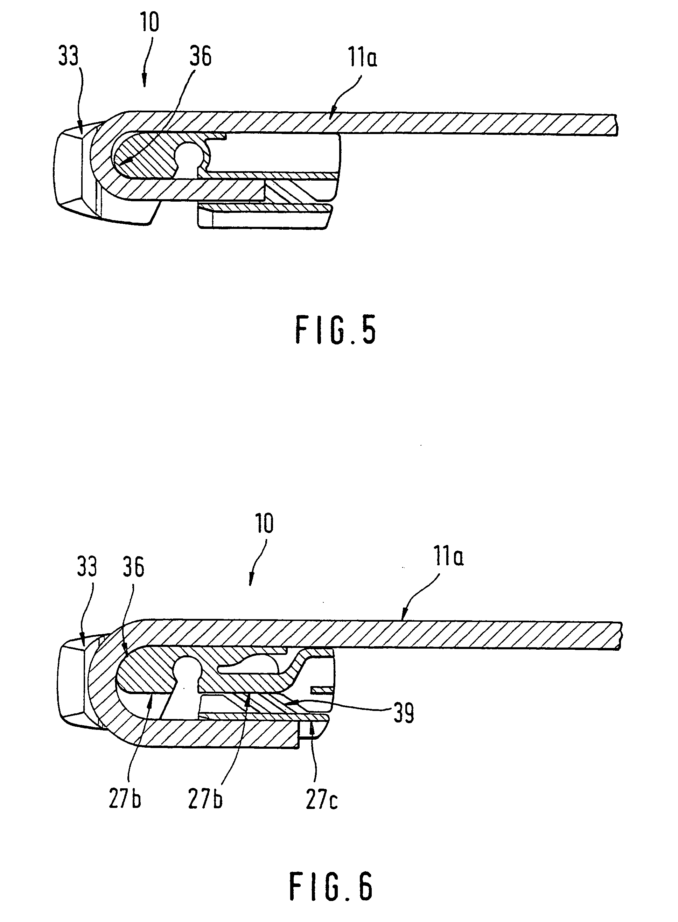

In Figur 5 ist ein Verbindungsstück 10 mit einem hakenartigen Wischerarmende 11a in Montageposition gezeigt.

In Figur 6 ist ebenfalls ein erfindungsgemäßes Verbindungsstück 10 mit einem Wischerarm 11a gezeigt, jedoch weist der Wischerarm 11a hier einen größeren Radius R als in Figur 5 auf. Deshalb rutscht das abgebogene Ende unter das nachgiebige Plateau 27c und drückt dieses gegebenenfalls etwas nach oben. Deutlich zu erkennen ist hier die Arretierung über die Erhebungen 33 des Verbindungsstücks 10.

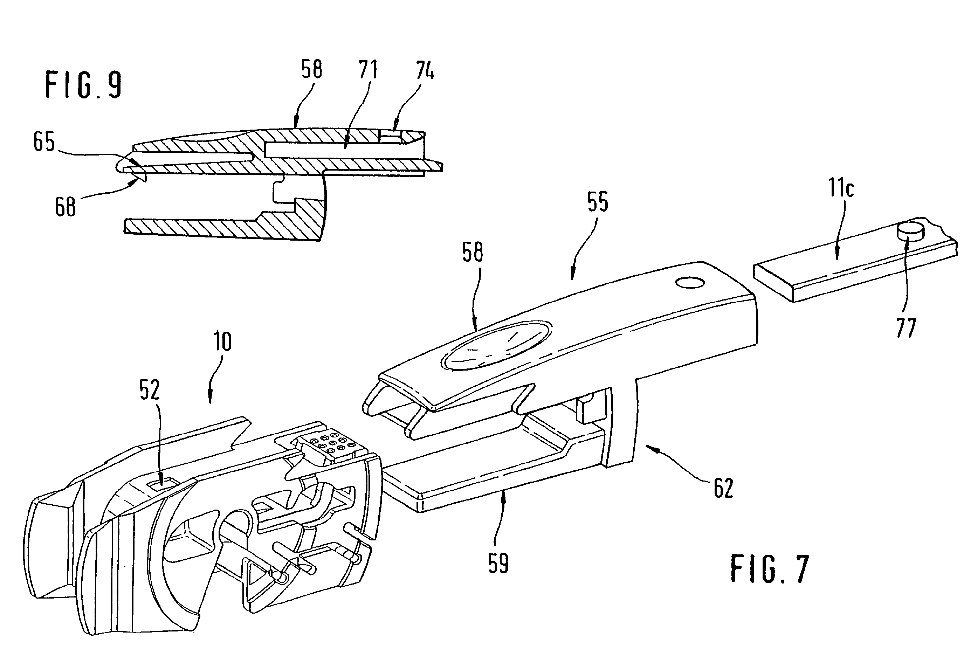

In Figur 7 ist ein erfindungsgemäßes Verbindungsstück 10 zusammen mit einem Adapter 55 und einem leistenförmigen Wischarmende 11c dargestellt. Der Adapter 55 weist im wesentlichen eine lange und eine kurze Längsstrebe 58, 59 auf, welche durch eine Querstrebe 62 miteinander verbunden sind, derart, daß eine gabelartige Struktur entsteht.

In Figur 9 ist das Adapterteil 55 im Schnitt dargestellt. Die lange obere Längsstrebe 58 weist auf ihrer Unterseite im vorderen, dem Verbindungsstück 10 zugewandten Bereich eine Arretierungszunge 65 auf an deren Ende Zähne 68 angebracht sind, die zur Arretierung des Adapters 55 in den Aussparungen 52 des Verbindungsstücks 10 dienen. Auf der dem Wischerarm 11 zugewandten Seite des Adapters 55 befindet sich eine Armaufnahme 71, welche aus einer Ausnehmung und einem Arretierungsloch 74 besteht. Die Armaufnahme 71 ist derart ausgebildet, daß ein leistenförmiger Wischerarm 11c eingeschoben werden kann und über einen Wischarmzapfen 77 der in das Arretierungsloch 74 einschnappt, arretiert wird.

Bei der Verbindung des Adapters 55 mit dem Verbindungsstück 10 wird die kurze Längsstrebe 59 in den Bereich zwischen mittlerer und unterer Fläche 27b und c eingeschoben. Die lange Längsstrebe 58 mit der Arretierungszunge 65 des Adapters 55 gleitet auf der oberen Fläche 27a des Verbindungsstücks 10 nach vorne. In eingerastetem Zustand greifen die Zähne 68 in die Aussparungen 52.

Es ist auch möglich auf der Unterseite der kurzen Längsstrebe 59 einen Arretierungsbolzen anzubringen, der in eingerastetem Zustand in ein im nachgiebigen Plateau, also der Fläche 27c befindliches Loch einrastet.

## Patentansprüche

1. Verbindungsstück (10) zum Verbinden eines Wischblatts (12) mit einem Wischerarm (11), mit einem Körper, der mit einem Wischerarmende (11a,b,c) verbindbar ist und Mittel (30) zum Aufnehmen und Abstützen des Wischblatts, Mittel (36) zum Aufnehmen hakenförmiger Wischarmenden (11a) und Mittel (43) zum Aufnehmen stiftartiger Wischarmenden (11b) aufweist, wobei das Verbindungsstück (10) wenigstens ein weiteres Mittel (52) zur Aufnahme eines anderen Wischarmendes (11c) aufweist, **dadurch gekennzeichnet, dass** das andere Wischarmende (11c) gabelförmig ausgebildet ist.

2. Verbindungsstück (10) zum Verbinden eines Wischblatts (12) mit einem Wischerarm (11), mit einem Körper, der mit einem Wischerarmende (11a,b,c) verbindbar ist und Mittel (30) zum Aufnehmen und Abstützen des Wischblatts, Mittel (36) zum Aufnehmen hakenförmiger Wischarmenden (11a) und Mittel (43) zum Aufnehmen stiftartiger Wischarmenden (11b) aufweist, wobei das Verbindungsstück (10) wenigstens ein weiteres Mittel (52) zur Aufnahme eines anderen Wischarmendes (11c) aufweist, wobei das andere Wischarmende (11c) ein leistenförmiges Wischarmende (11c) mit Zapfen(77) ist, **dadurch gekennzeichnet, dass** dieser in Verbindung mit einem dem Verbindungsstück (10) zugewandten, gabelförmigen Adapter (55) ist.

3. Verbindungsstück (10) nach Anspruch 1 oder 2, **dadurch gekennzeichnet, dass** das Verbindungsstück (10) einen nachgiebigen Bereich (41) aufweist, der als Plateau (27c) ausgebildet ist.

4. Verbindungsstück (10) nach Anspruch 3, **dadurch gekennzeichnet, dass** die Mittel (30) zum Aufnehmen und Abstützen des Wischblatts (12) welche das Plateau (27c) tragen, Schlitze (40) aufweisen, derart dass eine federnde Querschnittsstruktur entsteht, die durch mindestens einen Steg (39) gebildet ist.

5. Verbindungsstück (10) nach Anspruch 4, **dadurch gekennzeichnet, dass** das Plateau (27c) in einer Ebene liegt, zu welcher der mindestens eine Steg (39) einen Winkel kleiner 90° aufweist.

6. Verbindungsstück (10) nach Anspruch 3, **dadurch gekennzeichnet, dass** der mindestens eine nachgiebige Bereich (41) Anschläge (44) zur Begrenzung der Nachgiebigkeit aufweist.

7. Verbindungsstück (10) nach einem der vorhergehenden Ansprüche, **dadurch gekennzeichnet, dass** die Mittel (30) zum Aufnehmen und Abstützen des Wischblatts (12) ein quer durchragendes Loch (43) aufweisen, wobei sich in einer vom Loch (43) gebildeten Aufnahme eine elastische Lasche (45) befindet.

8. Verbindungsstück (10) nach einem der vorhergehenden Ansprüche, **dadurch gekennzeichnet, dass** der Körper wenigstens einen klammerartigen Überstand (31) aufweist, der zur Arretierung eines Wischarmendes (11a) dienen kann.

## Claims

1. Connecting piece (10) for connecting a wiper blade (12) to a wiper arm (11), with a body which can be connected to one wiper-arm end (11a, b, c) and has means (30) for receiving and supporting the wiper blade, means (36) for receiving hook-shaped wiper-arm ends (11a) and means (43) for receiving pin-like wiper-arm ends (11b), the connecting piece (10) having at least one further means (52) for receiving another wiper-arm end (11c), **characterized in that** the other wiper-arm end (11c) is of fork-shaped design.

2. Connecting piece (10) for connecting a wiper blade (12) to a wiper arm (11), with a body which can be connected to one wiper-arm end (11a, b, c) and has means (30) for receiving and supporting the wiper blade, means (36) for receiving hook-shaped wiper-arm ends (11a) and means (43) for receiving pin-like wiper-arm ends (11b) , the connecting piece (10) having at least one further means (52) for receiving another wiper-arm end (11c), the other wiper-arm end (11c) being a strip-shaped wiper-arm end (11c) with a journal (77), **characterized in that** this journal is connected to a fork-shaped adaptor (55) facing the connecting piece (10).

3. Connecting piece (10) according to Claim 1 or 2, **characterized in that** the connecting piece (10) has a flexible region (41) which is designed as a plateau (27c).

4. Connecting piece (10) according to Claim 3, **characterized in that** the means (30) for receiving and supporting the wiper blade (12) and which bear the plateau (27c) have slots (40) in such a manner that a resilient cross-sectional structure is produced which is formed by at least one web (39).

5. Connecting piece (10) according to Claim 4, **characterized in that** the plateau (27c) lies in a plane with respect to which the at least one web (39) is at an angle of less than 90°.

6. Connecting piece (10) according to Claim 3, **characterized in that** the at least one flexible region (41) has stops (44) for limiting the flexibility.

7. Connecting piece (10) according to one of the preceding claims, **characterized in that** the means (30) for receiving and supporting the wiper blade (12) have a hole (43) protruding through transversely, an elastic tab (45) being situated in a receptacle formed by the hole (43).

8. Connecting piece (10) according to one of the preceding claims, **characterized in that** the body has at least one clip-like projecting length (31) which can serve to lock one wiper-arm end (11a) in place.

## Revendications

1. Pièce de liaison (10) pour relier un balai d'essuie-glace (12) à un bras d'essuie-glace (11) comprenant un corps qui peut être relié à l'extrémité (11a, b, c) d'un bras et des moyens (30) pour recevoir et soutenir le balai d'essuie-glace, des moyens (36) pour recevoir les extrémités de bras d'essuyage (11a) en forme de crochets et des moyens (43) pour recevoir des extrémités de bras d'essuie-glace (11b) en forme de broche, la pièce de liaison (10) comportant au moins un autre moyen (52) pour recevoir une autre extrémité de bras d'essuie-glace (11c),
**caractérisée en ce que**
l'autre extrémité de bras d'essuie-glace (11c) est en forme de fourche.

2. Pièce de liaison (10) pour relier un balai d'essuie-glace (12) à un bras d'essuie-glace (11) comportant un corps qui peut être relié à une extrémité de bras d'essuie-glace (11a, 11b, 11c) et des moyens (30) pour recevoir et soutenir le balai d'essuie-glace, les moyens (36) pour recevoir les extrémités de bras d'essuie-glace en forme de crochets (11a) et des moyens (43) pour recevoir des extrémités de bras d'essuie-glace (11b) en forme de broche,
la pièce de liaison (10) ayant au moins un autre moyen (52) pour recevoir une autre extrémité de bras d'essuie-glace (11c),
cette autre extrémité de bras d'essuie-glace (11c) étant une extrémité de bras d'essuie-glace (11c) en forme de longeron muni d'un bouton (77),
**caractérisée en ce que**
celui-ci est destiné à être relié à un adaptateur en forme de fourche (55) tournée vers la pièce de liaison (10).

3. Pièce de liaison (10) selon la revendication 1 ou 2,
**caractérisée en ce qu'**
elle comporte une zone souple (41) en forme de plateau (27c).

4. Pièce de liaison (10) selon la revendication 3,
**caractérisée en ce que**
les moyens (30) pour recevoir et soutenir le balai d'essuie-glace (12) et qui portent le plateau (27c) ont des fentes (44) de façon à former une structure de section élastique constituée par au moins une nervure (39).

5. Pièce de liaison (10) selon la revendication 4,
**caractérisée en ce que**
le plateau (27c) est situé dans un plan avec lequel la nervure (39) fait un angle inférieur à 90°.

6. Pièce de liaison (10) selon la revendication 3,
**caractérisée par**
au moins une zone souple (41) comportant des butées (44) pour limiter la souplesse.

7. Pièce de liaison (10) selon l'une quelconque des revendications précédentes 1 à 6,
**caractérisée en ce que**
les moyens (30) pour recevoir et soutenir le balai d'essuie-glace (12) comportent un trou (43) traversant transversalement avec une patte élastique (45) dans le logement formé par le trou (43).

8. Pièce de liaison (10) selon l'une quelconque des revendications précédentes 1 à 7,
**caractérisée en ce que**
le corps comporte au moins une partie en saillie (31) en forme de pince servant au blocage d'une extrémité de bras d'essuie-glace (11a).
